# EUROPÄISCHE PATENTSCHRIFT

(11) **EP 0 456 244 B1**
(45) Veröffentlichungstag und Bekanntmachung des Hinweises auf die Patenterteilung: **14.09.1994**
(21) Anmeldenummer: 91107564.6
(22) Anmeldetag: 09.05.1991
(51) Int. Cl.: G01M 15/00

(54) **Verfahren zum Prüfen von Verbrennungsmotoren bei der Montage**
Test procedure for combustion engines during assembly
Procédé d'essai pour moteurs à combustion au cours du montage

(30) Priorität: 11.05.1990 DE 4015219; 16.08.1990 DE 4025882
(43) Veröffentlichungstag der Anmeldung: 13.11.1991
(73) Patentinhaber: EGM Entwicklungsgesellschaft für Montagetechnik GmbH, D-30855 Langenhagen (DE)
(72) Erfinder: Badur, Klaus, D-3008 Garbsen 4 (DE); Nolting, Thomas, D-3012 Langenhagen (DE); Meier, Benedikt, D-3000 Hannover 1 (DE); Tietjen, Jörg, D-30171 Hannover (DE)
(74) Vertreter: Möller, Friedrich, Dipl.-Ing.

(56) Entgegenhaltungen:
- FR-A- 2 526 944
- US-A- 3 648 819
- US-A- 4 448 063

## Beschreibung

Die Erfindung betrifft ein Verfahren zum Prüfen von Verbrennungsmotoren gemäß dem Oberbegriff des Anspruchs 1.

Ständig steigende Qualitätsanforderungen erfordern eine zuverlässige Prüfung bei der Serienherstellung, insbesondere der Montage, von Verbrennungsmotoren oder dergleichen. Neben der dimensionellen Überprüfung von Einzelteilen zur Bildung von Verbrennungsmotoren gewinnt eine Funktionsprüfung der montierten Einzelteile bei der Montage der Verbrennungsmotoren eine zunehmende Bedeutung.

Bekannt ist bereits, eine Endprüfung an einem schleppend angetriebenen und fertig montierten Verbrennungsmotor vorzunehmen. Diese Prüfung findet also bei passivem Verbrennungsmotor im kalten, unbefeuerten Zustand desselben statt. Solche Prüfungen werden daher im Fachjargon als "Kalttest" bezeichnet. Nachteilig an diesem bekannten Kalttest ist die vielfach zu späte Fehlererkennung, wodurch eine Reparatur nicht mehr oder nur noch mit verhältnismäßig hohen Reparaturkosten möglich ist. Darüber hinaus sind mit dem bekannten Kalttest nur unzureichende Fehlerdiagnosen möglich, da nur angezeigt wird, ob der Verbrennungsmotor in Ordnung oder nicht in Ordnung ist. Schließlich ermöglicht nur ein einziger Kalttest des fertig montierten Verbrennungsmotors keinen Informationsfluß zu und zwischen den einzelnen Montageschritten. Es können dadurch keine vorbeugenden Maßnahmen zur Fehlervermeidung bzw. Qualitätssteuerung getroffen werden.

Hiervon ausgehend liegt der Erfindung die Aufgabe zugrunde, ein Verfahren der eingangs genannten Art dahingehend weiterzuentwickeln, daß eine frühe Fehlererkennung und eine gezielte Fehlerdiagnose möglich ist.

Zur Lösung dieser Aufgabe weist das erfindungsgemäße Verfahren die Maßnahmen des Anspruchs 1 auf. Dadurch, daß zusätzlich zur End-Funktionsprüfung an in bezug auf die Funktion des Verbrennungsmotors wesentlichen Montagestellen innerhalb der Montagelinie Zwischen-Funktionsprüfungen vorgenommen werden, lassen sich eventuell auftretende Fehler, und zwar insbesondere Funktionsfehler, die sowohl durch fehlerhafte Einzelteile als auch eine falsche Montage hervorgerufen worden sein können, vor dem nächsten Montageschritt erkennen. Es können so die Fehler dort beseitigt werden, wo sie entstanden sind. Darüber hinaus läßt sich durch die Zwischenprüfungen der (Funktions-)Fehler exakt definieren. Schließlich wird verhindert, daß nach einer fehlerhaften Montage weitere - wenn auch einwandfreie - Montagevorgänge vorgenommen werden, auf die bei frühzeitiger Fehlererkennung hätte verzichtet werden können. Das erfindungsgemäße Verfahren trägt somit maßgeblich zur Verbesserung der Wirtschaftlichkeit bei der Herstellung von Verbrennungsmotoren bei.

Gemäß einer Weiterbildung des erfindungsgemäßen Verfahrens werden die bei den Funktionsprüfungen ermittelten Prüfwerte mit idealen Sollwerten verglichen. Vorzugsweise werden Prüfwertkurven mit entsprechenden Sollwertkurven verglichen. Diese stellen zweckmäßigerweise die Meßparameter, insbesondere das zum schleppenden Antrieb des zu prüfenden Verbrennungsmotors erforderliche Drehmoment, über den Drehwinkel mindestens einer Umdrehung der Kurbelwelle oder der Nockenwelle dar. Auf diese Weise können Fehler andeutende Abweichungen zwischen der Sollwertkurve und der Meßwertkurve in Abhängigkeit von dem hiermit zusammenhängenden Drehwinkel lokalisiert werden.

Bei einem bevorzugten Verfahren dieser Art werden die Sollkurven anhand von vorzugsweise mehreren verschiedenen Muster-Verbrennungsmotoren ermittelt, und zwar ebenfalls im geschleppten Kaltlauf. Bei der End-Funktionsprüfung handelt es sich hierbei um im wesentlichen vollständig montierte Verbrennungsmotoren, wohingegen bei den Zwischen-Funktionsprüfungen die Muster-Verbrennungsmotoren entsprechend dem zu prüfenden Montageumfang montiert sind. Aus den ermittelten Sollkurven mehrerer Muster-Verbrennungsmotoren, die naturgemäß untereinander abweichende Sollkurven erzeugen, wird eine Hüllkurve gebildet. Diese läßt sich besonders gut mit den bei den einzelnen Funktionsprüfungen ermittelten Prüfkurven vergleichen, indem innerhalb der Hüllkurvenfläche liegende Prüfkurven den einwandfreien Zustand bzw. die einwandfreie Funktion des Probanten indizieren. Wenn eine Prüfkurve oder ein Teil derselben (ein oder mehrere Peaks) aus der Hüllkurve herausfällt, ist dieses ein Anzeichen für eine durch eine fehlerhafte Montage oder ein fehlerhaftes Einzelteil hervorgerufene Funktionsstörung.

Gemäß einer Weiterbildung des erfindungsgemäßen Verfahrens werden die bei den Zwischen-Funktionsprüfungen ermittelten Prüfwerte bzw. Prüfkurven erfaßt, insbesondere in einem Rechner gespeichert und bei der Auswertung der nachfolgenden Zwischen-Funktionsprüfungen, vor allem aber der End-Funktionsprüfung, herangezogen. Weiterhin können die bei einer Zwischen-Funktionsprüfung - oder auch bei mehreren Zwischen-Funktionsprüfungen - ermittelten und gespeicherten Prüfwerte zur Steuerung vorangehender und/oder folgender Montage- bzw. Fertigungsprozesse herangezogen werden. Auch können die bei der Funktionsprüfung ermittelten Werte zur Auswahl geeigneter Motorenkomponente für weitergehende Montagevorgänge herangezogen werden. Diese Maßnahmen ermöglichen nicht nur eine schnelle Fehlererkennung; vielmehr eine Reaktion auf die Fehler, also ein entsprechendes "Gegensteuern". Dieses kann soweit gehen, daß die in Abhängigkeit von einer Zwischen-Funktionsprüfung ermittelten Werte für eine nachfolgende Montage solche Motorenkomponenten oder -teile ausgesucht werden, die im Rahmen ihrer zulässigen Toleranzabweichungen sich als besonders "passende" Teile oder Komponenten heraustellen.

Nach einem weiteren Vorschlag der Erfindung werden die im Rahmen der einzelnen Funktionsprüfung zu erfolgenden Messungen bei einer Schleppdrehzahl des zu prüfenden Verbrennungsmotors durchgeführt, die unterhalb seiner Nenn-Leerlaufdrehzahl liegt, insbesondere im Bereich zwischen 100 und 200 min⁻¹. Hierdurch wird eine große Signaldynamik und eine gute Auflösung der aufgenommenen Prüfkurve erreicht, so daß aussagekräftige Prüfwerte gebildet werden können.

Verfahrensmäßig ist in besonderer Weise die End-Funktionsprüfung ausgebildet. Hierbei werden verschiedene Parameter ermittelt bzw. geprüft, nämlich vorzugsweise der Öldruck, die Öltemperatur, der Ansaugunterdruck, der Abgasgegendruck und gegebenenfalls zusätzlich die Kompression. Letztere wird in der Regel nur zu Vergleichsmessungen ermittelt. Um den Öldruck und die Öltemperatur ermitteln zu können, wird bei der End-Funktionsprüfung der Verbrennungsmotor mit aufgefüllter (Nenn-)Ölmenge geschleppt.

Weiterhin wird verfahrensmäßig bei der End-Funktionsprüfung so vorgegangen, daß hierbei zunächst ohne wesentliche Messungen der Verbrennungsmotor mit etwa der (Nenn-)Leerlaufdrehzahl (etwa 1000 min⁻¹) angetrieben wird, bis sich ein nahezu konstanter Öldruck eingestellt hat. Danach erfolgt die Messung bei niedrigeren Drehzahlen von etwa 100 bis 200 min⁻¹. Diese Messung erfolgt aufgrund der Nenn-Öltemperatur unter realen Bedingungen zur Erzielung entsprechender Prüfwerte.

Gemäß einer anderen vorteilhaften Ausgestaltung des Verfahrens wird von dem bei der End-Funktionsprüfung ermittelten (Schlepp-)Drehmoment das Reibmoment in den Lagern, Kolben, Nockentrieb usw. sowie ein durch die Massenkräfte der bewegten Teile des Verbrennungsmotors hervorgerufenes Massenmoment aus vorherigen Zwischen-Funktionsprüfungen subtrahiert. Das so entstehende Differenzmoment läßt Rückschlüsse auf den Gaswechselprozeß des Verbrennungsmotors zu.

Weiterhin wird vorgeschlagen, bei den Funktionsprüfungen wenigstens einige Messungen an jedem Zylinder des Verbrennungsmotors separat durchzuführen. Hierdurch wird eine wesentliche Voraussetzung für eine gezielte Fehlerortung und Zuordnung geschaffen.

Ein bevorzugtes Beispiel für das erfindungsgemäße Verfahren wird nachfolgend anhand der Zeichnung näher erläutert. In dieser zeigen:
- Fig. 1: einen Montageablaufplan, in den das erfindungsgemäße Verfahren integriert ist,
- Fig. 2: einen detaillierten Montageablaufplan im Bereich der Montage einer Kurbelwelle unter Einbeziehung des erfindungsgemäßen Verfahrens,
- Fig. 3: eine Hüllkurve zur Auswertung einer nach dem erfindungsgemäßen Verfahren aufgenommenen Meßkurve,
- Fig. 4: eine nach dem erfindungsgemäßen Verfahren aufgenommene Meßkurve mit Fenstern zur Auswertung ausgewählter (spezifischer) Funktionen.

Nach dem erfindungsgemäßen Verfahren werden an den Verbrennungsmotoren einerseits in unterschiedlichen Montagezuständen Zwischen-Funktionsprüfungen und andererseits bei nahezu komplett montierten Verbrennungsmotoren End-Funktionsprüfungen vorgenommen. Die Ergebnisse dieser Funktionsprüfungen werden gespeichert und rechnerisch ausgewertet. Insbesondere werden die Ergebnisse vorangegangener Funktionsprüfungen, nämlich Zwischen-Funktionsprüfungen, bei nachfolgenden Zwischen-Funktionsprüfungen, vor allem der End-Funktionsprüfung, herangezogen.

Durchgeführt werden sämtliche Funktionsprüfungen an kalten, also unbefeuerten Verbrennungsmotoren. Diese werden daher für die Funktionsprüfungen schleppend angetrieben. Dieser Antrieb erfolgt über einen mikroprozessorgesteuerten Asynchron-Elektromotor, der einen exakt zu regelnden und drehzahlkonstanten (Schlepp-)Antrieb der zu prüfenden Verbrennungsmotoren gewährleistet. Zwischen dem Asynchron-Elektromotor und dem jeweils zu schleppenden Verbrennungsmotor ist eine Kupplung, insbesondere eine Stahllamellenkupplung, mit integrierter Andockeinheit und gegebenenfalls eine Überlastsicherung angeordnet. Außerdem ist in Abhängigkeit vom zu prüfenden Typ des Verbrennungsmotors die Schleppkraft des Asynchron-Elektromotors wahlweise kraft- oder reibschlüssig übertragbar.

Das in erster Linie zu messende Drehmoment aller Zylinder wird mit Hilfe einer Drehmomentmeßwelle ermittelt, die dem vorstehend näher beschriebenen Antrieb des Verbrennungsmotors zugeordnet ist. Die Drehmomentmeßwelle ist mit entsprechenden Sensoren bestückt, die eine hohe Linearität bei minimaler Hysterese gewährleisten. Außerdem sind die Sensoren so ausgewählt, daß sie den rauen Umgebungsbedingungen einer Montagelinie gerecht werden, also eine gute Temperaturbeständigkeit, hohe Schockfestigkeit und geringe elektrische Störempfindlichkeit aufweisen. In Abhängigkeit vom Drehmoment wird die Position der Kurbelwelle ermittelt. Dieses erfolgt über einen an sich bekannten Inkrementalgeber, der so ausgebildet ist, daß er ebenfalls die vorstehend im Zusammenhang mit der Drehmomentmeßwelle geschilderten Eigenschaften aufweist.

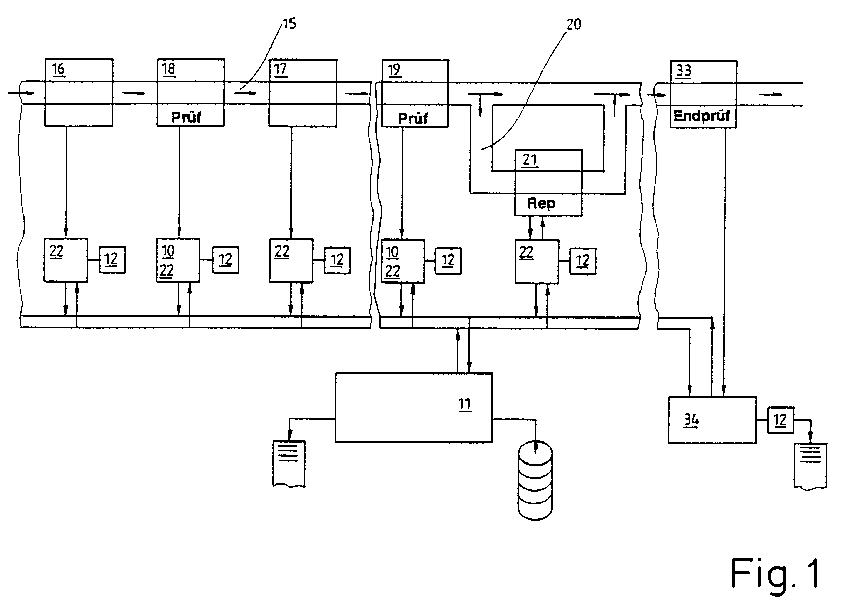

Die von der Drehmomentmeßwelle und dem Inkrementalgeber bei den Funktionsprüfungen ermittelten Meßdaten werden einer in der Fig. 1 schematisch dargestellten Prüfstandsrechnereinheit 10 zugeführt. In dieser werden die ermittelten Daten soweit verarbeitet, daß sie an einen Zentralrechner 11, der als Host dient, weitergeleitet werden können. Darüber hinaus wird mit Hilfe eines Expertensystems oder einer anders gearteten künstlichen Intelligenz erfindungsgemäß eine Fehlerzuordnung vorgenommen und eventuell ermittelte Fehler bei jeder Funktionsprüfung, also sowohl den Zwischen-Funktionsprüfungen als auch der End-Funktionsprüfung, auf einem der Prüfstandsrechnereinheit 10 zugeordneten Monitor 12 angezeigt. Die Prüfstandsrechnereinheit 10 dient weiterhin dazu, die jeweilige Montagestation und gegebenenfalls eine damit zusammenhängende Reparaturschleife zu steuern. Weiterhin erfolgt durch die Prüfstandsrechnereinheit 10 eine Regelung und Steuerung des Asynchron-Elektromotors zum schleppenden Antrieb des zu prüfenden Verbrennungsmotors.

Die zu prüfenden Verbrennungsmotoren sind zur Durchführung des erfindungsgemäßen Verfahrens mit einem Signalgeber versehen. Dieser kann zum Beispiel durch eine Marke an der Schwungscheibe oder einen Geber für ein elektrisches Signal im Zündsystem (Zündverteiler; elektrische Einspritzanlage) gebildet sein. Der Signalgeber ist einem bestimmten markanten Betriebspunkt des Verbrennungsmotors zugeordnet, zum Beispiel dem oberen Kompressionstotpunkt eines Zylinders. Hierdurch wird eine gezielte Zuordnung der Meßwerte zum entsprechenden Zylinder und Arbeitstakt des Verbrennungsmotors geschaffen, aus der sich aufgrund der Zündfolge des Verbrennungsmotors die Meßwerte anderer Zylinder konkret ermitteln lassen, d. h. die gewonnenen Meßwerte dem jeweiligen Zylinder zugeordnet werden können.

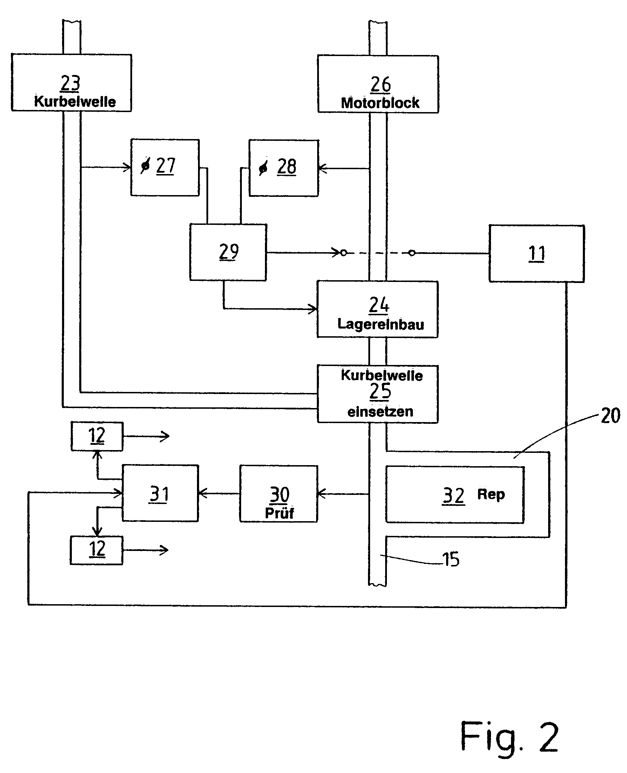

Nachfolgend wird unter Bezugnahme auf die Fig. 1 und 2 das Verfahren bei den Zwischen-Funktionsprüfungen erläutert:

Gemäß der Fig. 1 folgen in einer schematisch dargestellten Montagelinie 15 mehrere vereinfacht dargestellte Montagestationen 16, 17 aufeinander. Zwischen den Montagestationen 16 und 17 ist eine (erste) Zwischen-Funktionsprüfung 18 vorgesehen. Eine weitere Zwischen-Funktionsprüfung 19 folgt der Montagestation 17 oder gegebenenfalls weiteren nicht dargestellten Montagestationen. Demzufolge kann nach jeder Montagestation eine Zwischen-Funktionsprüfung erfolgen, es ist aber auch möglich, bestimmte Zwischen-Funktionsprüfungen gemeinsam mehreren Montagestationen zuzuordnen. Die Verteilung der Zwischen-Funktionsprüfungen auf die Montagestationen hängt demnach zweckmäßigerweise von der Art der Montage ab, da vielfach erst nach mehreren aufeinanderfolgenden Montageschritten eine weitere Zwischen-Funktionsprüfung sinnvoll erscheint, nämlich verwertbare Ergebnisse liefert.

Weiterhin ist der Fig. 1 zu entnehmen, daß hinter der Zwischen-Funktionsprüfung 19 eine Reparaturschleife 20 mit einer dieser zugeordneten Reparaturstation 21 angeordnet ist. Derartige Reparaturschleifen 20 bzw. Reparaturstationen 21 sind zweckmäßigerweise bestimmten Stellen der Montagelinie 15 zugeordnet, wobei sie gegebenenfalls hinter jeder Zwischen-Funktionsprüfung, aber auch nur hinter bestimmten, ausgewählten Zwischen-Funktionsprüfungen angeordnet sein können. In die Reparaturschleife 20, insbesondere die Reparaturstation 21, kann gegebenenfalls eine weitere Zwischen-Funktionsprüfung integriert sein, die dazu dient, festzustellen, ob die vorgenommene Reparatur erfolgreich gewesen ist.

Schließlich kann der Fig. 1 entnommen werden, daß jeder Zwischen-Funktionsprüfung 18 bzw. 19 nicht nur eine Prüfstandsrechnereinheit 10, sondern auch eine Stationssteuerung 22 und ein Monitor 12 zugeordnet sind. Die Prüfstandsrechnereinheit 10 - und im vorliegenden Falle auch die Stationssteuerungen 22 - sind mit dem Zentralrechner 11 verbunden, und zwar derart, daß von diesen Signale zum Zentralrechner 11 hin und auch zurück, also zur Stationssteuerung 22 bzw. zur Prüfstandsrechnereinheit 10, übertragen werden können. Es besteht also eine komplette Verkettung zwischen den Prüfstandsrechnereinheiten 10, dem Zentralrechner 11 und den Stationssteuerungen 22.

Mit den Zwischen-Funktionsprüfungen 18 und 19 sowie gegebenenfalls weiteren in der Fig. 1 nicht dargestellten Zwischen-Funktionsprüfungen sind in der Montagelinie 15 nach bestimmten Montagevorgängen Funktionsprüfungen an entsprechend montierten Verbrennungsmotoren durchführbar. Hierdurch ist eine frühe Erkennung von Funktionsfehlern, die insbesondere durch fehlerhafte Teile oder Montagevorgänge hervorgerufen sind, möglich. Durch einen entsprechenden Vergleich der Prüfwerte bzw. Prüfkurven zwischen aufeinanderfolgenden Zwischen-Funktionsprüfungen 18 und 19 oder dergleichen ist eine genaue Fehlerdiagnose möglich. Anders als beim Stand der Technik wird auf dem Monitor 12 der jeweiligen Zwischen-Funktionsprüfungen 18 bzw. 19 nicht nur angezeigt, ob die Funktion gegeben ist oder eine Fehlfunktion vorliegt; vielmehr wird im Klartext angezeigt, welcher Fehler gegebenenfalls vorhanden ist. Daraufhin können in der Reparaturstation 21 der Reparaturschleife 20 gezielte Reparaturmaßnahmen vorgenommen werden. Es entfällt also eine Fehlersuche in der Reparaturstation 21. Darüber hinaus wird durch die ständige Zwischen-Funktionsprüfung ausgeschlossen, daß nicht reparaturfähige Verbrennungsmotoren weiterbearbeitet werden, d. h. diese in weiteren Montagestationen 16 bzw. 17 mit zusätzlichen Aggregaten oder Baugruppen versehen werden.

Zweckmäßigerweise werden bei den Zwischen-Funktionsprüfungen 18 und 19 das Schleppmoment und der Kurbelwinkel durch eine Drehmomentmeßwelle und einen Inkrementalgeber ermittelt. Das gemessene Drehmoment setzt sich zusammen aus Massenkräften und Reibkräften. Gaskräfte werden hier noch nicht berücksichtigt, da der Verbrennungsmotor noch nicht soweit komplettiert ist, daß in den Zylindern sich ein Gasdruck aufbauen kann, da entweder der Zylinderkopf oder die Ventile noch fehlen. Die Schleppmomentmessung bezieht sich bei den Zwischen-Funktionsprüfungen 18 und 19 auf die Summe der Schleppmomente sämtlicher Zylinder. Es erfolgt also bei den Zwischen-Funktionsprüfungen 18 und 19 keine Differenzierung zwischen den Meßergebnissen einzelner Zylinder. Gleichwohl können Rückschlüsse auf Fehler in den jeweiligen Zylindern abgeleitet werden aus der Zuordnung eines auf einen Fehler hindeutenden Ausreißers in der Prüfkurve zum jeweiligen Kurbelwinkel. Dieses geschieht rechnerisch unter Zugrundelegung der (bekannten) Zündfolge des geprüften Verbrennungsmotors.

Die Zwischen-Funktionsprüfungen 18 und 19 erfolgen erfindungsgemäß bei einer deutlich unter der Nenn-Leerlaufdrehzahl liegenden Schleppdrehzahl des zu prüfenden Verbrennungsmotors. Diese liegt im Bereich zwischen 100 bis 200 min⁻¹. Vorzugsweise werden die Zwischen-Funktionsprüfungen 18 bzw. 19 oder dergleichen bei einer Schleppdrehzahl von 100 min⁻¹ durchgeführt. Daraus resultiert eine große Signaldynamik, die eine große Auflösung der Prüfwerte bzw. der Prüfkurve ermöglicht. Hieraus sind zuverlässige Rückschlüsse auf eventuelle Fehlfunktionen möglich.

In der Fig. 2 ist ein besonders vorteilhaftes Zusammenspiel der Zwischen-Funktionsprüfungen mit entsprechenden Montagestationen 24 und 25 der Montagelinie 15 schematisch dargestellt. Doppelstriche symbolisieren hier den Transportweg des teilweise montierten Verbrennungsmotors bzw. seiner Einzelteile, während einfache Striche den Informationsfluß von Meß- bzw. Prüfdaten symbolisieren.

Es geht bei dem Ausführungsbeispiel der Fig. 2 um den Einbau einer Kurbelwelle mit ihren Hauptlagern in einen soweit vorbereiteten Motorblock. An einer Bearbeitungsstation 23 der Kurbelwelle erfolgt eine Kurbelwellendurchmessermessung 27, nämlich eine Messung der Kurbelwellendurchmesser im Bereich der Hauptlager. Parallel dazu erfolgt in der Endbearbeitungsstation 26 nach der Fertigbearbeitung des Motorblocks eine Sitzdurchmessermessung 28 für den Hauptlagersitz der Kurbelwelle. Die hieraus gewonnenen Meßdaten werden in dem Zentralrechner 11 miteinander verglichen und daraufhin die Hauptlager in einer Hauptlagerauswahlstation 29 "passend" zu dem Durchmesser der Kurbelwelle im Bereich der Hauptlager einerseits und dem Sitzdurchmesser im Motorblock andererseits ausgewählt. Haben beispielsweise sowohl der Sitzdurchmesser im Motorblock als auch der Durchmesser der Kurbelwelle ein (innerhalb zulässiger Toleranzen sich befindendes) Übermaß, ist es auf diese Weise möglich, ein Hauptlager auszuwählen, das ein entsprechendes Übermaß (ebenfalls im Rahmen zulässiger Toleranzen) aufweist. Das so ausgewählte Hauptlager wird dann in der Montagestation 24 in den Motorblock eingebaut und anschließend in der Montagestation 25 die Kurbelwelle eingesetzt. Darauf folgt eine Zwischen-Funktionsprüfung 30, die im Falle eines bei einem Soll-Ist-Wertvergleich 31 auftretenden Fehlers aufgrund der gezielten Auswahl der Kurbelwellenhauptlager sowie der Überprüfung der Abmessungen der Kurbelwelle und des Motorblocks nur auf eine fehlerhafte Hauptlager- bzw. Kurbelwellenmontage hindeuten kann. Demzufolge wird auf dem Monitor 12 entweder angezeigt, daß die Kurbelwelle richtig eingebaut ist, wonach der soweit montierte Verbrennungsmotor auf der Montagelinie 15 weiter zur nächsten nicht in der Fig. 2 dargestellten Montagestation verfahren wird, oder es wird eine fehlerhafte Montage der Kurbelwelle bzw. ihrer Hauptlager angezeigt, woraufhin der soweit vormontierte Verbrennungsmotor in die Reparaturschleife 32 eingefahren und in dieser eine vorzugsweise manuelle Nachbesserung, nämlich eine richtige Montage, erfolgt.

Nachfolgend wir die Verfahrensweise bei einer End-Funktionsprüfung unter Bezugnahme auf die Fig. 1, 3 und 4 näher beschrieben:

Gemäß der Fig. 1 ist der Montagelinie 15 eine (einzige) End-Funktionsprüfung 33 nachgeordnet. Diese befindet sich also am Ende der Montagelinie 15. Zu dieser End-Funktionsprüfung 33 werden die Ergebnisse der vorher durchgeführten Zwischen-Funktionsprüfungen 18, 19 oder dergleichen herangezogen, nämlich die entsprechenden Daten aus dem Zentralrechner 11 (Host) abgerufen und über ein Expertensystem 34 ausgewertet.

Die End-Funktionsprüfung 33 wird ebenfalls im kalten Zustand des nahezu komplett montierten Verbrennungsmotors durchgeführt, indem dieser wiederum schleppend angetrieben wird. Bei der End-Funktionsprüfung 33 befindet sich eine Nenn-Ölfüllung im Verbrennungsmotor. Allerdings findet bei der End-Funktionsprüfung 33 keine Brennstoffeinspritzung statt. Demzufolge braucht im Bereich der End-Funktionsprüfung 33 der Verbrennungsmotor noch nicht mit einem Vergaser oder einer Einspritzanlage versehen zu sein. Ebenfalls kann ein Zündsystem fehlen. Die Zündkerzen (bei einem Otto-Motor) oder die Einspritzdüsen (bei einem Diesel-Motor) sind jedoch vorzugsweise bei der End-Funktionsprüfung 33 schon im Zylinderkopf eingeschraubt. Es ist aber auch denkbar, daß im Falle einer zusätzlichen Kompressionsmessung während der End-Funktionsprüfung 33 anstatt der Zündkerzen oder Einspritzdüsen Druckaufnehmer in den entsprechenden Gewindebohrungen des Zylinderkopfs eingeschraubt sind.

Der zu prüfende Verbrennungsmotor wird bei der End-Funktionsprüfung 33 zunächst - nachdem Öl aufgefüllt worden ist - mit nahezu Nenn-Leerlaufdrehzahl, also etwa 1000 min⁻¹, schleppend angetrieben. Hierbei findet noch keine Prüfung bzw. Messung statt. Dieser Antrieb mit der (erhöhten) Drehzahl dient dazu, das aufgefüllte Öl auf einen stabilen Öldruck zu bringen, damit bei der späteren Prüfung bzw. Messung keine Verfälschung der Prüfwerte stattfindet. Nachdem das auf den zu prüfenden Verbrennungsmotor aufgefüllte Öl die Betriebstemperatur erreicht hat, wird zur Durchführung der Prüfung der Verbrennungsmotor mit geringerer Drehzahl, nämlich wiederum etwa 100 bis 200 min⁻¹ (insbesondere 100 min⁻¹), geschleppt.

Bei der End-Funktionsprüfung 33 wird wiederum das Schlepp-Drehmoment in Abhängigkeit vom Kurbelwinkel und gegebenenfalls zusätzlich, aber nur zu Kontrollzwecken, der Kompressionsdruck ermittelt. Da bei der End-Funktionsprüfung 33 sich das Schleppmoment der nunmehr verschlossenen Zylinderräume aus drei Komponenten, nämlich Massenkräften, Reibkräften (Anlager, Kolben, Nockentrieb usw.) und Gaskräften, zusammensetzt, sind erweiterte Aussagen über die Funktion des Probanten möglich. Vor allem können die Gaskräfte aus dem Schleppmoment isoliert ermittelt werden, indem die bei den vorangegangenen Zwischen-Funktionsprüfungen 18 und 19 ermittelten Reib- und Massenkräfte vom Schleppmoment bei der End-Funktionsprüfung 33 subtrahiert werden. Es bleiben dann (isoliert) aussagekräftige Meßwerte für die Gaskräfte über.

Weiterhin werden bei der End-Funktionsprüfung 33 der Öldruck die Öltemperatur, der Gasansaugunterdruck und Abgasgegendruck ermittelt. Zumindest die beiden letztgenannten Parameter werden vorzugsweise für jeden Zylinder des Verbrennungsmotors isoliert ermittelt.

Besondere Maßnahmen werden erfindungsgemäß zur Ermittlung des Ansaugunterdrucks und des Abgasgegendrucks getroffen. Demnach werden bevorzugt im Ansaug- und Abgassammelkrümmer Drosselstellen simuliert, die vorzugsweise durch im Querschnitt variabel gestaltete Lochblenden gebildet sind. Hierdurch werden die aufgrund der niedrigen Schleppdrehzahl und der damit verbundenen geringen Gaswechselfrequenz sich nur schwach ausprägenden Dynamikeffekte beim Gaswechselprozeß so weit erhöht, daß sie meßtechnisch erfaßbar und verwertbare Ansaugunterdruck- und Abgasgegendruckdaten liefern.

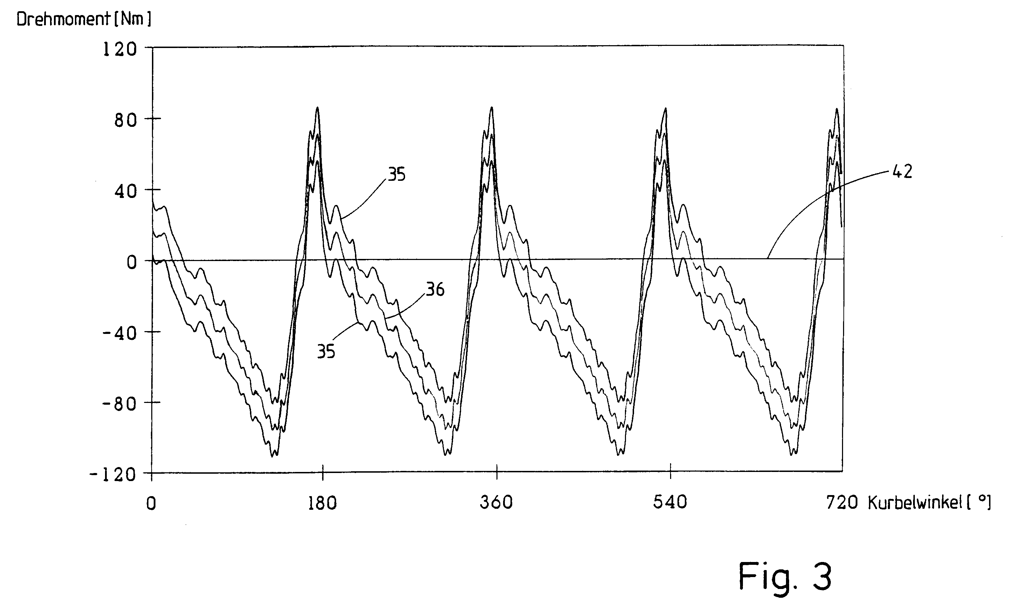

Die bei der End-Funktionsprüfung 33 ermittelten Prüfwerte werden in Form von Prüfkurven mit sogenannten Meister-Prüfkurven verglichen. Hierbei handelt es sich um Prüfkurven, die mit einwandfrei arbeitenden Muster-Verbrennungsmotoren aufgenommen worden sind. Zweckmäßigerweise werden die Meister-Prüfkurven anhand mehrerer verschiedener Muster-Verbrennungsmotoren, beispielsweise zehn Muster-Verbrennungsmotoren, ermittelt. Aus diesen Meister-Prüfkurven wird eine in der Fig. 3 dargestellte Hüllkurve gebildet. Diese setzt sich aus zwei, äußere Grenzen der Hüllkurve einschließende Randprüfkurven 35 zusammen. Diese im Zentralrechner 11 abgespeicherte Hüllkurve wird bei der End-Funktionsprüfung 33 überlagert mit der Prüfkurve 36 des jeweils der End-Funktionsprüfung 33 unterworfenen Verbrennungsmotors. Solange sich die Prüfkurve 36 - wie bei der Darstellung der Fig. 3 - innerhalb der durch die Randprüfkurven 35 festgelegten Grenzen der Hüllkurve befindet, liegt eine einwandfreie Funktion des Verbrennungsmotors vor. Ausreißer der Prüfkurve 36, die die Hüllkurve verlassen, deuten auf Fehler bei der End-Funktionsprüfung 33 hin.

Eine wesentliche Bedeutung bei einem Vergleich der Prüfkurve mit der Meister-Prüfkurve hat der Signalgeber der zu prüfenden Verbrennungsmotoren. Diese erzeugen an einem definierten Zylinder bei einem bestimmten Betriebszustand eine Art Startsignal oder Marke für die Prüfung bzw. die Prüfkurve. Aufgrund dieses Startsignals bzw. der Marke ist eine "deckungsgleiche" Überlagerung der Meister-Prüfkurve mit der individuell ermittelten Prüfkurve möglich.

In der vorstehenden Weise kann auch bei der Auswertung der Zwischen-Funktionsprüfung 18 bzw. 19 vorgegangen werden.

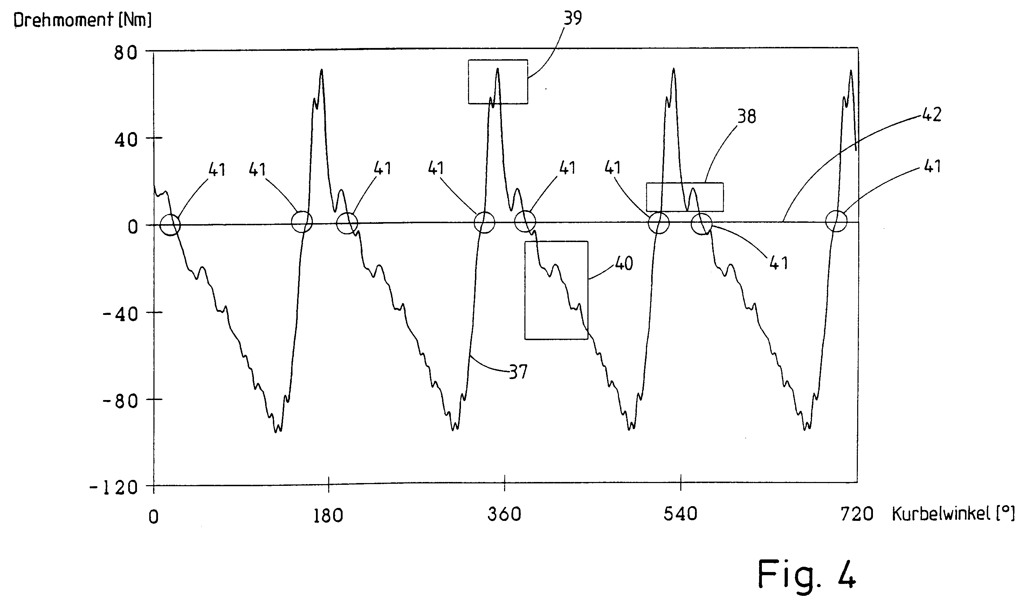

Eine weitere Besonderheit des erfindungsgemäßen Verfahrens besteht darin, daß gemäß der Fig. 4 der Prüfkurve 37 ein oder mehrere sogenannte Fenster zugeordnet werden. In der Darstellung gemäß der Fig. 3 sind der Prüfkurve 37 drei verschiedene Fenster 38, 39 und 40 zugeordnet. Diese Fenster 38..40 markieren signifikante Bereiche der Prüfkurve 37, auf die bei der Auswertung der End-Funktionsprüfung 33 besonderer Wert gelegt werden soll. Zweckmäßigerweise befinden sich die Fenster 38..40 dort, wo bestimmte Fehler erwartungsgemäß auftauchen. Dadurch wird eine rasche, gezielte Auswertung der End-Funktionsprüfung 33 ermöglicht.

Erfindungsgemäß sind die Fenster 38, 39 oder 40 frei setztbar. Dies geschieht derart, daß wiederum in Muster-Verbrennungsmotoren gezielt bestimmte Funktionsfehler, die in erster Linie durch eine Fehlmontage, aber auch durch fehlerhafte Einzelkomponenten der Verbrennungsmotoren, herbeigeführt werden, eingebaut werden. Aufgrund eines solchen in einen Muster-Verbrennungsmotor eingebauten Fehlers wird der geschleppte Muster-Verbrennungsmotor einer simulierten End-Funktionsprüfung 33 unterworfen und dort, wo aufgrund des eingebauten Fehlers ein Ausreißer in der Prüfkurve 37 entsteht, ein entsprechendes Fenster 38, 39 oder 40 gesetzt. Bei Bedarf können - wie beim Ausführungsbeispiel der Fig. 4 - mehrere Fenster gleichzeitig gesetzt werden. Befindet sich die Prüfkurve 37, insbesondere ein Peak desselben, außerhalb des Fensters 38, 39 oder 40, deutet dieses auf einen Funktionsfehler des Probanten hin.

Weiterhin ist der Fig. 4 zu entnehmen, daß (nur zur Verdeutlichung der Darstellung) runde Fenster 41 auf der den Kurbelwinkel darstellenden Achse 42 der Prüfkurve 37 vorgesehen sind. Im Bereich der Fenster 41 sind die Nulldurchgänge der Schleppkräfte ermittelbar. Liegen die Nulldurchgänge außerhalb der Fenster 41, ist das ein Zeichen dafür, daß eine Phasenverschiebung zwischen der Kurbelwelle und der Nockenwelle vorhanden ist, also ein Steuerriemen oder eine Steuerkette für die Nockenwelle falsch montiert ist. In der Fig. 4 sind acht Fenster 41 dargestellt. Diese Anzahl der Fenster 41 kommt dadurch zustande, daß jedem Zylinder des zu prüfenden Verbrennungsmotors zwei Fenster 41 zugeordnet sind, nämlich ein Fenster für die Steuerung der Einlaßventile und ein Fenster 41 für die Steuerung der Auslaßventile. Auf diese Weise können in einem Fenster 41 auftretende Abweichungen genau dem jeweiligen Zylinder und dem Ventil (Einlaß- oder Auslaßventil) zugeordnet werden.

Die vorstehend erläuterten Fenster können auch bei den Zwischen-Funktionsprüfungen 18, 19 zur Anwendung kommen.

## Patentansprüche

1. Verfahren zum Prüfen von Verbrennungsmotoren, wobei der montierte Verbrennungsmotor schleppend angetrieben und während des passiven Kaltlaufs des Verbrennungsmotors eine Funktionsprüfung, insbesondere des Drehmoments über dem Kurbelwinkel, des Ansaugunterdrucks, des Abgasgegendrucks oder der Kompression, als End-Funktionsprüfung (33) vorgenommen wird, **dadurch gekennzeichnet,** daß während der Montage des Verbrennungsmotors mindestens eine zusätzliche Funktionsprüfung als eine Zwischen-Funktionsprüfung (18, 19) durchgeführt wird.

2. Verfahren nach Anspruch 1, dadurch gekennzeichnet, daß signifikante Parameter mit am passiv angetriebenen Verbrennungsmotor gemessenen Prüfwerten bzw. Prüfkurven (36, 37) verglichen werden und hieraus Aussagen über mindestens eine spezifische Fehlfunktion des Verbrennungsmotors getroffen wird.

3. Verfahren nach Anspruch 1 oder 2, dadurch gekennzeichnet, daß die bei Funktionsprüfungen (18, 19; 33) ermittelten Prüfwerte oder Prüfkurven (36, 37) mit idealen Sollwerten bzw. Soll- oder Meister-Prüfkurven verglichen werden, wobei die Meister-Prüfkurven vorzugsweise anhand mindestens eines geschleppten Muster-Verbrennungsmotors mit bevorzugten Solltoleranzen und Funktionen ermittelt werden.

4. Verfahren nach Anspruch 3, dadurch gekennzeichnet, daß Meister-Prüfkurven verschiedener Muster-Verbrennungsmotoren ermittelt und zu einer von zwei Randprüfkurven (35) umgebenen Hüllkurve zusammengefaßt werden.

5. Verfahren nach einem der Ansprüche 1 bis 4, dadurch gekennzeichnet, daß die zumindest bei Zwischen-Funktionsprüfungen (18, 19) ermittelten Prüfwerte oder Prüfkurven (36, 37) erfaßt und gespeichert sowie zur Auswertung nachfolgender Zwischen- Funktionsprüfungen (18), insbesondere der End-Funktionsprüfung (33), herangezogen werden.

6. Verfahren nach einem der Ansprüche 1 bis 5, dadurch gekennzeichnet, daß die bei den Funktionsprüfungen (18, 19; 33) ermittelten Prüfwerte bzw. Prüfkurven (36, 37), die auf eine Fehlfunktion des Verbrennungsmotors hindeuten, derart ausgewertet werden, daß auf einer Anzeige, insbesondere einem Monitor (12), die Fehlfunktion vorzugsweise im Klartext ausgegeben wird.

7. Verfahren nach Anspruch 6, dadurch gekennzeichnet, daß die im Klartext erfolgende Ausgabe bestimmter Fehlfunktionen aus den Prüfwerten oder Prüfkurven (36, 37) mittels eines Expertensystems (34) und/oder einer künstlichen Intelligenz erzeugt werden.

8. Verfahren nach Anspruch 6 oder 7, dadurch gekennzeichnet, daß bestimmte Fehlfunktionen detektierende Teilbereiche, insbesondere Fenster (38, 39, 40, 41), aus den Prüfkurven (36, 37) ausgewählt und vorzugweise zur Klartextausgabe der entsprechenden Fehlfunktionen herangezogen werden.

9. Verfahren nach Anspruch 8, dadurch gekennzeichnet, daß die signifikanten Teilbereiche aus den Prüfkurven (36, 37) durch Fenster (38, 39, 40, 41) definiert werden, deren Position anhand von gezielt vorgegebenen Fehlern einer simulierten Funktionsprüfung (18, 19; 33) mindestens eines Muster-Verbrennungsmotors positioniert werden, indem im denjenigen Bereich, in dem die Prüfkurve (36) aufgrund der simulierten Fehlfunktion zu Veränderungen führt, das jeweilige Fenster (38, 39, 40, 41) gesetzt wird.

10. Verfahren nach einem der Ansprüche 1 bis 9, dadurch gekennzeichnet, daß die Funktionsprüfungen (18, 19; 33) in Abhängigkeit vom Kurbelwinkel, insbesondere der Kurbelwelle, und des Schlepp-Drehmoments des angetriebenen Verbrennungsmotors durchgeführt werden.

11. Verfahren nach einem der Ansprüche 1 bis 10, dadurch gekennzeichnet, daß die Funktionsprüfungen (18, 19; 33) zumindest während der Ermittlung der Prüfwerte bzw. Prüfkurven (36, 37) mit einer unterhalb der Nenn-Leerlaufdrehzahl des Verbrennungsmotors liegenden Prüfdrehzahl durchgeführt werden, die insbesondere zwischen 100 und 200 min⁻¹ liegt, vorzugsweise bei 100 min⁻¹.

12. Verfahren nach einem der Ansprüche 1 bis 11, dadurch gekennzeichnet, daß bei den Funktionsprüfungen (18, 19; 33) zumindest einige Parameter an den Zylindern des Verbrennungsmotors einzeln gemessen werden.

13. Verfahren nach einem der Ansprüche 1 bis 12, dadurch gekennzeichnet, daß die End-Funktionsprüfung (33) mit einer Ölfüllung des Verbrennungsmotors durchgeführt wird.

14. Verfahren nach Anspruch 13, dadurch gekennzeichnet, daß bei der End-Funktionsprüfung (33) zunächst der Verbrennungsmotor bei noch nicht erfolgenden Messungen mit nahezu seiner Nenn-Leerlaufdrehzahl, insbesondere mit etwa 1000 min⁻¹, schleppend angetrieben wird, bis sich ein etwa konstanter Öldruck eingestellt hat, und anschließend die Prüfwerte bzw. Prüfkurven (36, 37) mit geringerer Drehzahl, insbesondere im Bereich zwischen 100 und 200 min⁻¹, ermittelt werden.

15. Verfahren nach Anspruch 13 oder 14, dadurch gekennzeichnet, daß bei der End-Funktionsprüfung (33) das Schlepp-Drehmoment, der Öldruck, die Öltemperatur, der Ansaugunterdruck und der Abgasgegendruck vorzugsweise kumulativ ermittelt werden und gegebenenfalls zusätzlich eine Messung der Kompression erfolgt.

16. Verfahren nach einem der Ansprüche 1 bis 15, dadurch gekennzeichnet, daß von dem bei der End-Funktionsprüfung (33) ermittelten Schlepp-Drehmoment aus Reibkräften, Massenkräften und Gaskräften das Schlepp-Drehmoment einer entsprechenden Zwischen-Funktionsprüfung (18 bzw. 19) aus Reibkräften und Massenkräften subtrahiert wird zur insbesondere isolierten Ermittlung der reinen Gaskräfte.

17. Verfahren nach Anspruch 15 oder 16, dadurch gekennzeichnet, daß zur Ermittlung des Ansaugunterdrucks und des Abgasgegendrucks bei der End-Funktionsprüfung (33) dem Verbrennungsmotor Drosselstellen zugeordnet werden, vorzugsweise im Bereich der Ansaug- und Abgassammelkrümmer.

18. Verfahren nach einem der Ansprüche 15 bis 17, dadurch gekennzeichnet, daß der Öldruck bei unterhalb der Nenn-Leerlaufdrehzahl liegender Prüfdrehzahl, insbesondere im Bereich von 100 bis 200 min⁻¹, anhand von approximierten Vergleichsfunktionen ermittelt wird.

19. Verfahren nach einem der Ansprüche 1 bis 18, dadurch gekennzeichnet, daß vom Verbrennungsmotor ein Start-Signal erzeugt wird zur Markierung eines bestimmten Betriebszustandes und Zuordnung eines entsprechenden Zylinders zu den ermittelten Prüfwerten.

## Claims

1. Method for testing internal combustion engines in which the assembled internal combustion engine is driven by external power and a functional test, in particular of the torque as a function of the crank angle, of the induction vacuum, of the exhaust gas back pressure or of the compression, is undertaken as a final functional test (33) during the passive cold run of the internal combustion engine, characterized in that at least one additional functional test is carried out as an intermediate functional test (18, 19) during the assembly of the internal combustion engine.

2. Method according to Claim 1, characterized in that significant parameters are compared with test values or test curves (36, 37) measured on the passively driven internal combustion engine and conclusions are drawn from this with respect to at least one specific faulty function of the internal combustion engine.

3. Method according to Claim 1 or 2, characterized in that the test values or test curves (36, 37) determined during functional tests (18, 19; 33) are compared with ideal required values and required or master test curves, the master test curves being preferably determined by means of at least one prototype internal combustion engine which is driven by external power and has preferred required tolerances and functions.

4. Method according to Claim 3, characterized in that master test curves of various prototype internal combustion engines are determined and are combined to provide an envelope curve surrounded by two boundary test curves (35).

5. Method according to one of Claims 1 to 4, characterized in that the test values or test curves (36, 37) determined at least by intermediate functional tests (18, 19) are recorded and are stored and used for evaluating subsequent intermediate functional tests (18), in particular the final functional test (33).

6. Method according to one of Claims 1 to 5, characterized in that test values or test curves (36, 37), which are determined during the functional tests (18, 19; 33) and which indicate a faulty function of the internal combustion engine, are evaluated in such a way that the faulty function is output, preferably in clear text, on a display, in particular a monitor (12).

7. Method according to Claim 6, characterized in that the output of certain faulty functions in clear text is generated from the test values or test curves (36, 37) by means of an expert system (34) and/or an artificial intelligence.

8. Method according to Claim 6 or 7, characterized in that certain partial ranges detecting faulty functions, in particular windows (38, 39, 40, 41) are selected from the test curves (36, 37) and are preferably used for clear text output of the corresponding faulty functions.

9. Method according to Claim 8, characterized in that the significant partial ranges of the test curves (36, 37) are defined by windows (38, 39, 40, 41) whose positions are determined by using deliberately specified faults of a simulated functional test (18, 19; 33) of at least one prototype internal combustion engine, the particular window (38, 39, 40, 41) being placed in that range in which the test curve (36) leads to changes on the basis of the simulated faulty function.

10. Method according to one of Claims 1 to 9, characterized in that the functional tests (18, 19; 33) are carried out as a function of crank angle, in particular of the crankshaft, and of the resistance torque of the externally driven internal combustion engine.

11. Method according to one of Claims 1 to 10, characterized in that the functional tests (18, 19; 33) are carried out at least during the determination of the test values or test curves (36, 37) at a test rotational speed located below the rated idling rotational speed of the internal combustion engine, which test rotational speed is located in particular between 100 and 200 rpm, preferably at 100 rpm.

12. Method according to one of Claims 1 to 11, characterized in that during the functional tests (18, 19; 33), at least some parameters are individually measured on the cylinders of the internal combustion engine.

13. Method according to one of Claims 1 to 12, characterized in that the final functional test (33) is carried out with an oil filling of the internal combustion engine.

14. Method according to Claim 13, characterized in that during the final functional test (33), the internal combustion engine is initially driven by external power with almost its rated idling rotational speed when the measurements have not yet taken place, in particular at approximately 1,000 rpm, until an approximately constant oil pressure has appeared and the test values or test curves (36, 37) are subsequently determined at a lower rotational speed, in particular in the range between 100 and 200 rpm.

15. Method according to Claim 13 or 14, characterized in that during the final functional test (33), the resistance torque, the oil pressure, the oil temperature, the induction vacuum and the exhaust gas back pressure are preferably determined cumulatively and, if required, a measurement of the compression takes place in addition.

16. Method according to one of Claims 1 to 15, characterized in that the resistance torque, consisting of friction forces and inertia forces, of a corresponding intermediate functional test (18 or 19) is subtracted from the resistance torque, consisting of friction forces, inertia forces and gas forces, determined in the final functional test (33), for, in particular, the isolated determination of the pure gas forces.

17. Method according to Claim 15 or 16, characterized in that throttle locations, preferably in the region of the induction manifold and exhaust manifold, are assigned to the internal combustion engine for determining the induction vacuum and the exhaust gas back pressure during the final functional test (33).

18. Method according to one of Claims 15 to 17, characterized in that the oil pressure is determined by means of approximated comparison functions at a test rotational speed located below the rated idling rotational speed, in particular in the range from 100 to 200 rpm.

19. Method according to one of Claims 1 to 18, characterized in that a start signal is generated by the internal combustion engine in order to mark a certain operating condition and to allocate a corresponding cylinder to the test values determined.

## Revendications

1. Procédé d'essai de moteurs à combustion interne, le moteur à combustion interne monté étant entraîné par remorquage et, pendant la période de marche à froid passive du moteur à combustion interne, un essai de fonctionnement, en particulier du couple de rotation, étant effectué à titre d'essai de fonctionnement (33) final en appréhendant l'angle de rotation du vilebrequin, la dépression à l'aspiration, la contre-pression des gaz d'échappement ou la compression, caractérisé en ce que, pendant le montage du moteur à combustion interne, il est procédé au moins à un essai de fonction supplémentaire, faisant office d'essai de fonctionnement (18, 19) intermédiaire.

2. Procédé selon la revendication 1, caractérisé en ce que des paramètres significatifs sont comparés à des valeurs d'essai, ou à des courbes d'essai (36, 37), mesurées sur un moteur à combustion interne entraîné passivement et des diagnostics étant posés, à partir de cela, pour au moins un défaut de fonctionnement spécifique du moteur à combustion interne.

3. Procédé selon la revendication 1 ou 2, caractérisé en ce que les valeurs d'essai ou les courbes d'essai (36, 37) établies lors des essais de fonctionnement (18, 19; 33) sont comparées à des valeurs de consigne, ou des courbes d'essai de consigne ou de référence, idéales, les courbes d'essai de référence étant, de préférence, établies à l'aide d'au moins un moteur à combustion interne modèle, remorqué, avec tolérances de consigne et de fonctionnement préférées.

4. Procédé selon la revendication 3, caractérisé en ce que des courbes d'essai de référence de différents moteurs à combustion interne modèles sont établies et rassemblées en une courbe enveloppe entourée par deux courbes d'essai (35) marginales.

5. Procédé selon l'une des revendications 1 à 4, caractérisé en ce qu'au moins les valeurs d'essai ou les courbes d'essai (36, 37), établies lors des essais de fonctionnement (18, 19) intermédiaires sont saisies et enregistrées, ainsi qu'utilisées pour l'exploitation des essais de fonctionnement intermédiaires suivants, en particulier de l'essai de fonctionnement (33) final.

6. Procédé selon l'une des revendications 1 à 5, caractérisé en ce que les valeurs d'essai, ou les courbes d'essai (36, 37), établies lors des essais de fonctionnement (18, 19; 33), qui indiquent un défaut de fonctionnement du moteur à combustion interne, sont exploitées de telle sorte que, sur un seul affichage, en particulier un moniteur (12), le défaut de fonctionnement est délivré, de préférence, en langage clair.

7. Procédé selon la revendication 6, caractérisé en ce que l'édition, en langage clair, de certains défauts de fonctionnement, à partir des valeurs d'essai ou des courbes d'essai (36, 37), est produite au moyen d'un système expert (34) et/ou d'une intelligence artificielle.

8. Procédé selon la revendication 6 ou 7, caractérisé en ce que des zones partielles détectant certains défauts de fonctionnement, en particulier des fenêtres (38, 39, 40, 41), sont sélectionnées à partir des courbes d'essai (36, 37) et mises à profit, de préférence, pour l'émission en langage clair des défauts de fonctionnement correspondants.

9. Procédé selon la revendication 8, caractérisé en ce que les zones partielles significatives sont définies, à partir des courbes d'essai (36, 37) au moyen de fenêtres (38, 39, 40, 41), dont les positions sont fixées à l'aide des défauts, faits intentionnellement, d'un essai de fonctionnement (18, 19; 33) simulé, d'au moins un moteur à combustion interne modèle, la fenêtre (38, 39, 40, 41) respective étant placée dans la zone de celui-ci, dans laquelle la courbe d'essai (36) conduit à des changements, en raison du défaut de fonctionnement simulé.

10. Procédé selon l'une des revendications 1 à 9, caractérisé en ce que les essais de fonctionnement (18, 19; 33) sont effectués en fonction de l'angle de vilebrequin, en particulier de l'arbre de vilebrequin, et du couple de remorquage de moteur à combustion interne entraîné.

11. Procédé selon l'une des revendications 1 à 10, caractérisé en ce que les essais de fonctionnement (18, 19; 33) sont effectués au moins, pendant l'établissement des valeurs d'essai, ou des courbes d'essai (36, 37), avec une vitesse de rotation d'essai, se situant au-dessous de la vitesse de rotation de ralenti nominale du moteur à combustion interne, vitesse qui se situe en particulier dans une plage allant de 100 à 200 tours.min⁻¹, de préférence à 100 tours.min⁻¹.

12. Procédé selon l'une des revendications 1 à 11, caractérisé en ce que, lors des essais de fonctionnement (18, 19; 33) au moins quelques paramètres sont mesurés respectivement sur les différents cylindres du moteur à combustion interne.

13. Procédé selon l'une des revendications 1 à 12, caractérisé en ce que l'essai de fonctionnement final (33) est réalisé avec un remplissage d'huile du moteur à combustion interne.

14. Procédé selon la revendication 13, caractérisé en ce que tout d'abord, lors de l'essai de fonctionnement final (33), le moteur à combustion interne est entraîné, alors que les mesures n'ont pas encore eu lieu, par remorquage, à environ sa vitesse de rotation de ralenti nominale, en particulier à environ 1000 tours.min⁻¹, jusqu'à ce qu'une pression d'huile à peu près constante se soit établie, et ensuite les valeurs d'essai, respectivement les courbes d'essai (36, 37) sont établies avec une faible vitesse de rotation, située en particulier dans la plage comprise entre 100 et 200 tours.min⁻¹.

15. Procédé selon la revendication 13 ou 14, caractérisé en ce que, lors de l'essai de fonctionnement final (33), le couple de remorquage, la pression de l'huile, la température de l'huile, la dépression à l'aspiration et la contrepression des gaz d'échappement sont établis de préférence de manière cumulative et que, le cas échéant, une mesure de la compression soit effectuée en supplément.

16. Procédé selon l'une des revendications 1 à 15, caractérisé en ce que du couple en remorquage, déterminé lors de l'essai de fonctionnement final (33) et issu des forces de friction, des forces dues à l'inertie et des forces dues aux gaz, on soustrait le couple de remorquage d'un essai de fonctionnement intermédiaire (18 ou 19) issu des forces de friction et des forces d'inertie, pour déterminer en particulier, en les isolant, les forces purement dues aux gaz.

17. Procédé selon la revendication 15 ou 16, caractérisé en ce que des points d'étranglement sont associées au moteur à combustion interne, de préférence dans la zone des coudes d'aspiration et de collecte des gaz d'aspiration, pour l'établissement de la dépression de l'aspiration et de la contre-pression des gaz d'échappement, lors de l'essai de fonctionnement final (33).

18. Procédé selon l'une des revendications 15 à 17, caractérisé en ce que la pression d'huile, pour la vitesse de rotation d'essai, située en dessous de la vitesse de rotation de ralenti nominale, en particulier dans la zone comprise entre 100 et 200 tours.min⁻¹, est établie à l'aide de fonctionnements comparatifs approximatifs.

19. Procédé selon l'une des revendications 1 à 18, caractérisé en ce qu'un signal de départ est produit par le moteur à combustion interne pour marquer un certain état de fonctionnement et pour associer un cylindre correspondant aux valeurs d'essai déterminées.
